# EUROPÄISCHE PATENTANMELDUNG

(11) **EP 1 498 623 A1**
(43) Veröffentlichungstag der Anmeldung: **19.01.2005**
(21) Anmeldenummer: 04011508.1
(22) Anmeldetag: 14.05.2004
(51) Int. Cl.: F16C 33/10

(54) **Wellenlagerung und Lager**

(30) Priorität: 18.07.2003 DE 10332696
(71) Anmelder: ROBERT BOSCH GMBH, 70442 Stuttgart (DE)
(72) Erfinder: Dornhoefer, Gerd, 71229 Leonberg (DE); Schrittenlocher, Wolfgang, 76532 Baden-Baden (DE); Vogt, Andreas, 71272 Renningen (DE); Strupp, Michael, Chongwon-gun, Chungchongbuk-do 363-942 (KR)

(57) **Zusammenfassung**

Es wird eine Wellenlagerung und ein Lager (22, 28) für eine Welle (14), insbesondere einer elektrischen Maschine (10) vorgeschlagen. Die Wellenlagerung umfasst eine Welle (14), ein schmierstoffgetränktes Lager (16, 24 ) mit einer Ausnehmung (17) für die Welle (14) und einen um die Welle (14) angeordneten Ring (22, 28) zur Aufnahme von aus dem Lager (16, 24) austretendem Schmierstoff. Der Ring (22, 28) besteht aus einem Werkstoff mit als Kapillaren wirkenden Poren. Besonders geeignet ist ein Ring (22, 28) aus einem Sinterwerkstoff.

## Beschreibung

### Stand der Technik

Die Erfindung geht aus von einer Wellenlagerung und einem Lager nach dem Oberbegriff der unabhängigen Patentansprüche, wie zum Beispiel aus der EP 430 976 B 1 bekannt.
Die Wellenlagerung umfasst eine Welle und ein schmierstoffgetränktes Lager mit einer Ausnehmung für die Welle. Neben dem Lager ist auf der Welle ein Ring aus saugfähigem Material angeordnet, der aus dem Lager tretenden Schmierstoff aufsaugt.

### Vorteile der Erfindung

Die erfindungsgemäße Wellenlagerung und das Lager mit den kennzeichnenden Merkmalen der unabhängigen Patentansprüche haben den Vorteil, dass auf einfache Weise ein guter Schutz gegen eine Verschmutzung durch Schmierstoff zum Beispiel eines auf einer Welle angeordneten, rotierenden elektrischen Kontakts gegeben ist. Die Erfindung ist besonders vorteilhaft für Kommutatormotoren; sie kann aber auch zur Anwendung in allen Fällen kommen, in denen ein Kriechen des Schmierstoffs auf der Welle verhindert werden soll. Die Idee besteht darin, einen Ring aus einem Werkstoff vorzusehen, der als Kapillaren wirkende Poren aufweist. Dadurch ist der Ring in der Lage, überschüssigen Schmierstoff aufzunehmen und ein Weiterkriechen des Schmierstoffs weitgehend zu verhindern. Hierzu umfasst die elektrische Maschine eine Welle und ein schmierstoffgetränktes Lager mit einer Ausnehmung für die Welle. Ein um die Welle angeordneter Ring dient der Aufnahme von aus dem Lager tretendem Schmierstoff; vorzugsweise ist er zwischen dem Lager und dem Kommutator angeordnet.

Das Lager, insbesondere Sinterlager, für die Welle einer elektrischen Maschine weist eine Ausnehmung für die Welle auf und ist mit Schmierstoff getränkt. An einer Stirnseite des Lagers ist ein Ring zur Aufnahme von aus dem Lager austretendem Schmierstoff drehfest befestigt. Zwischen dem Ring und dem Lager ist vorzugsweise eine Schmierstoffbarriere vorgesehen.

Die Menge des Schmierstoffes, die der Ring aufsaugen kann, ist größer, wenn der Ring zumindest im Neuzustand im wesentlichen frei von Schmierstoff ist.

Es ist vorteilhaft, den Ring aus Sintermaterial auszubilden, da er somit formbeständig und einfach montierbar ist. Besonders vorteilhaft ist es, ihn aus dem gleichen oder einem ähnlichem Material wie das Lager herzustellen, da somit die Verträglichkeit der Materialpaarung von Lager und Ring gesichert ist. Der Ring kann beispielsweise aus einem zweiten, nicht oder nicht vollständig getränkten Lager bestehen.

Wenn der Ring drehfest auf der Welle angeordnet ist, lassen sich einfache Möglichkeiten der Befestigung umsetzen. Eine Möglichkeit ist beispielsweise, den Ring durch Verformung der Welle zu fixieren, insbesondere Anrollieren oder Verprägen. Dies hat den Vorteil, dass keine Presspassung zur Welle erforderlich ist und somit keine Beschädigung der Wellenoberfläche beim Aufschieben des Rings erfolgt. Die Anordnung eines Rings auf der Welle hat als Vorteil die Verwendung ganz normaler Lager.

Es ist vorteilhaft, den Ring direkt an der Stirnseite des Lagers anzuordnen, da dadurch bei übermäßiger Schmierstoffmenge ein ununterbrochener Kontakt mit dem Schmierstofffilm im Lager entsteht und somit überschüssiger Schmierstoff gut aufgesaugt wird. Außerdem kommt der Saugeffekt zum Tragen, wenn ausreichend viel Schmierstoff aus dem Lager ausgetreten ist.

Wenn der Ring, vorzugsweise drehfest, an der Stirnseite des Lagers befestigt ist und zwischen dem Ring und dem Lager eine Schmierstoffbarriere ausgebildet ist, erspart dies eine separate Montage des Rings auf der Welle.

Eine platzsparende Anordnung ist gegeben, wenn der Ring in einer stirnseitigen Senkung um die Ausnehmung angeordnet ist und insbesondere weitgehend bündig mit der Stirnfläche des Lagers abschließt.

Wenn die Kapillaren des Rings zumindest im Mittel größer als die des Lagers sind, wird die Gefahr vermindert, dass eine unerwünscht hohe Schmierstoffmenge über die Kapillarwirkung vom Lager heraus in den Ring gesaugt wird.

Bilden der Innendurchmesser des Lagers und der Innendurchmesser des Rings eine sich zur Stirnseite des Lagers hin vergrößernde Mantelfläche der Ausnehmung, so ist das Fügen der Welle und des Lagers vereinfacht. Außerdem tritt eine Kapillarwirkung ein, die den Schmierstoff im Lager hält oder sogar wieder in das Lager hineinzieht.

Weitere Vorteile und vorteilhafte Weiterbildungen ergeben sich aus den Unteransprüchen und der Beschreibung.

### Zeichnung

Ein Ausführungsbeispiel ist in der Zeichnung dargestellt und in der nachfolgenden Beschreibung näher erläutert. Es zeigen:
- Figur 1: einen Ausschnitt aus einer elektrischen Maschine,
- Figur 2: einen Teil eines Ankers,
- Figur 3: einen Ausschnitt aus Figur 2.

### Beschreibung

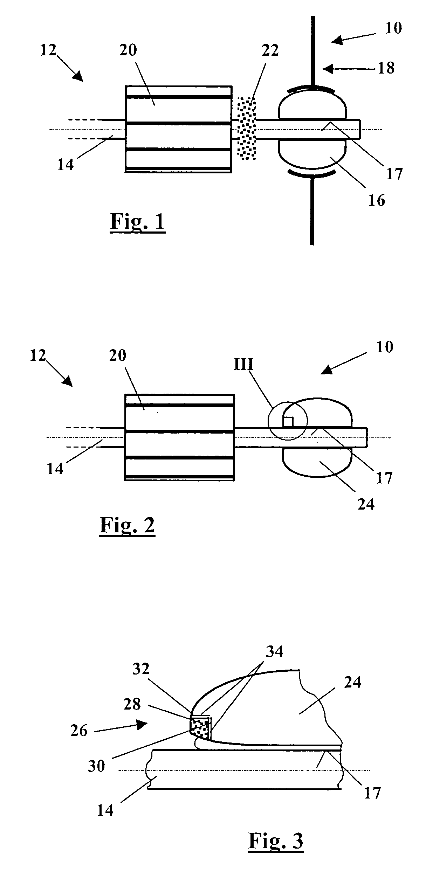

In der Figur 1 ist ausschnittsweise eine elektrische Maschine 10 gezeigt. Die elektrische Maschine 10 kann ein Elektromotor sein, der zum Beispiel in einem Kraftfahrzeug und dort beispielsweise in einem Fensterheber, Wischerantrieb, Gebläse etc. verwendet wird. Es kann sich jedoch auch um einen Generator oder einen anderen elektromotorischen Antrieb handeln, sowie um jede sich drehende Wellenlagerung, bei deren Einsatz ein Weiterkriechen des Lagerschmierstoffes entlang einer Welle nachteilig wäre.

Die elektrische Maschine weist einen teilweise dargestellten Anker 12 auf, der auf einer Welle 14 befestigt ist. Die Welle 14 ist gelagert, wobei nur ein erstes Lager 16 in einem Längsschnitt dargestellt ist. Für die Aufnahme der Welle 14 im ersten Lager 16 ist in diesem eine durchgehende, zylindrische Ausnehmung 17 bzw. Bohrung vorgesehen. Um einen einseitig wirkenden axialen Anschlag zu verwirklichen, kann das Lager 16 an der in bezug auf die elektrische Maschine 10 gesehen äußeren Seite verschlossen sein, so dass die Ausnehmung 17 dann nicht durchgehend wäre. Im vorliegenden Ausführungsbeispiel handelt es sich bei dem Lager 16 um ein an und für sich bekanntes gesintertes Gleitlager, vorzugsweise um ein gesintertes Kalottenlager, das beispielweise mit Öl als Schmierstoff getränkt ist. Das Lager 16 ist in dieser Darstellung in einem Lagerschild 18 der elektrischen Maschine 10 angeordnet. Die nicht dargestellte Ankerwicklung steht mit einem auf der Welle 14 angeordneten Kommutator 20 in Verbindung, der von ebenfalls nicht dargestellten Bürsten kontaktiert wird. Der Kommutator 20 ist benachbart zum Lager 16 angeordnet. Im Falle eines Generators sind anstelle des Kommutators 20 Schleifringe vorgesehen. In beiden Fällen handelt es sich um einen rotierenden elektrischen Kontakt.

Um die Welle 12 ist zwischen dem Lager 16 und dem Kommutator 20 ein erster Ring 22 zur Aufnahme von aus dem Lager 16 tretendem Schmierstoff vorgesehen. Der erste Ring 22 ist benachbart zum Lager 16 angeordnet und hat im wesentlichen die Form einer Hülse, wobei auch eine Scheibenform oder dergleichen denkbar ist. Der Ring 22 ist aus einem saugfähigen Material, vorzugsweise Sintermaterial, insbesondere dem gleichen Material wie das des Lagers 16; dies kann beispielsweise poröse Bronze oder Sintereisen sein. Alternativ kann der Ring 22 aus einem ähnlichem Material wie das Lager 16 sein. Wichtig ist, dass der Ring 22 aus einem Werkstoff mit als Kapillaren wirkenden Poren besteht. Zumindest im Neuzustand ist der Ring 22 im wesentlichen frei von Schmierstoff. Es kann jedoch sinnvoll sein, den Ring 22 mit einer gewissen Schmierstoffmenge zu versehen. Allerdings sollte die Konzentration unter der des Lagers 16 liegen.

Der Ring 22 ist drehfest auf der Welle 14 angeordnet. Dies kann dadurch erfolgen, dass der Ring 22 durch Verformung der Welle 14, insbesondere Anrollieren oder Verprägen, auf dieser fixiert wird. Eine gewisse Verformung des Rings 22 kann dabei auftreten. Durch die axiale Verformung der Welle 14 kann der Ring 22 zum Fügen auf der Welle 14 ein gewisses Spiel haben, so dass die Oberfläche der Welle 14 nicht beschädigt wird.

Tritt im Betrieb Schmierstoff aus dem Lager 16 und wandert es in Richtung des Kommutators 20, gelangt er zum Ring 22. Dort wird er zumindest teilweise vom Ring 22 aufgesaugt. Bei Verwendung von Sintermaterial wird der Schmierstoff über die Kapillarwirkung von den Poren des Rings 22 aufgenommen. Daher kann der Ring 22 auch als Kapillarschwamm bezeichnet werden. Da auf der Welle 14 zwischen dem Lager 16 und dem Ring 22 ein durchgehender Schmierstofffilm entstehen kann, ist es sinnvoll, wenn die Kapillaren des Rings 22 größer als die Kapillaren des Lagers 16 sind; zumindest sollten die Kapillaren des Rings 22 im Mittel größer als die Kapillaren des Lagers 16 sein. Dadurch bleibt die vom Ring 22 erzeugte Kapillarwirkung kleiner als die des Lagers 16, wodurch der Schmierstofffilm tendenziell eher zum Lager 16 wandert.

In der Figur 2 ist ebenfalls eine elektrische Maschine 10 mit einem Anker 12, einer Welle 14 und einem Kommutator 20 gezeigt. Hier sei auf die Beschreibung der Figur 1 verwiesen. Das Lagerschild 18 ist in dieser Figur nicht gezeigt.

Für die Lagerung der Welle 14 ist ein gegenüber dem ersten Lager 16 abgewandeltes, zweites Lager 24 vorgesehen, das in einem Längsschnitt dargestellt ist. Das zweite Lager 24 weist auch eine Ausnehmung 17 für die Welle 14 auf und ist ebenfalls mit Schmierstoff getränkt.

Das in der Figur 2 mit III gekennzeichnete Detail des zweiten Lagers 24 ist in der Figur 3 vergrößert dargestellt. An der dem Kommutator 20 zugewandten Stirnseite 26 des Lagers 24 ist ein zweiter Ring 28 zur Aufnahme von aus dem Lager 24 austretendem Schmierstoff, vorzugsweise drehfest, befestigt. Der Ring 28 ist in diesem Beispiel in einer stirnseitigen, vorzugsweise zylindrischen Senkung 30 um die Ausnehmung 17 befestigt. Vorzugsweise schließt der Ring 28 bündig mit der Stirnfläche 32 des Lagers 24 ab. Es ist auch eine stirnseitige Anordnung möglich, bei der der Ring 28 über die Stirnfläche 32 hinaussteht oder hinter ihr zurücksteht.

Der zweite Ring 28 hat ebenfalls im wesentlichen die Form einer Hülse, wobei auch eine Scheibenform denkbar ist. Der Ring 28 ist aus einem saugfähigen Material, vorzugsweise Sintermaterial, insbesondere dem gleichen Material wie das des Lagers 16. Dies kann beispielsweise poröse Bronze oder Sintereisen sein. Wesentlich ist, dass der Ring 28 aus einem Werkstoff mit als Kapillaren wirkenden Poren besteht. Zumindest im Neuzustand ist der Ring 28 im wesentlichen frei von Schmierstoff. Es kann jedoch sinnvoll sein, den Ring 28 mit einer gewissen Schmierstoffmenge zu versehen. Allerdings sollte die Konzentration unter der des Lagers 24 liegen.

Tritt im Betrieb Schmierstoff aus dem Lager 16 und zwar aus der Ausnehmung 17 in Richtung des Kommutators 20 aus, gelangt es zum Ring 28 und wird von diesem bzw. dessen Poren aufgesaugt. Bei Sintermaterial wird es über die Kapillarwirkung der Poren des Rings 28 aufgenommen. Daher kann der Ring 28 als Kapillarschwamm bezeichnet werden. Da im Bereich der Ausnehmung 17 zwischen dem Lager 24 und dessen Ring 28 ein durchgehender Schmierstofffilm entstehen kann, ist es sinnvoll, wenn die Kapillaren des Rings 28 größer sind als die Kapillaren des Lagers 24; zumindest sollten die Kapillaren des Rings 28 im Mittel größer als die Kapillaren des Lagers 24 sein. Dadurch bleibt die vom Ring 28 erzeugte Kapillarwirkung kleiner als die des Lagers 24, wodurch der Schmierstofffilm tendenziell eher im Lager 24 verbleibt.

Der Innendurchmesser des Lagers 24 und der Innendurchmesser des Rings 28 bilden gemeinsam eine sich zur Stirnseite 26 des Lagers 24 hin, vorzugsweise stetig, erweiternde Mantelfläche des Ausnehmung 17. Dadurch kann einerseits aus dem Spalt zwischen dem Lager 24 und der Ausnehmung 17 austretender Schmierstoff ungehindert zum Ring 28 dringen bzw. wird andererseits in die Ausnehmung 17 hineingezogen.

Schließlich ist zwischen dem Ring 28 und dem Lager 24 eine Schmierstoffbarriere 34 vorgesehen. Dies ist eine Schicht, die undurchlässig für den Schmierstoff ist. Dies kann eine zusätzliche dichte Materialschicht sein oder durch eine dichtende Bearbeitung einer oder beider sich berührendenden Oberflächen des Rings 28 und des Lagers 24 sein. Es ist aber auch möglich, keine Schicht vorzusehen, insbesondere wenn die Kapillaren bzw. Poren des Rings 28 - wie bereits beschrieben - zumindest im Mittel größer sind als die des Lagers 24. Dadurch kann Schmierstoff, der aus dem Lager 24 in den Ring 28 fließt, aufgrund der größeren Kapillarwirkung der Kapillaren bzw. Poren des Lagers 24 wieder zurück in das Lager 24 wandern. Dadurch kann ein fast geschlossener Schmierstoffkreislauf gebildet werden.

## Patentansprüche

1. Wellenlagerung umfassend eine Welle (14), ein schmierstoffgetränktes Lager (16, 24 ) mit einer Ausnehmung (17) für die Welle (14) und ein um die Welle (14) angeordneter Ring (22, 28) zur Aufnahme von aus dem Lager (16, 24) austretendem Schmierstoff, **dadurch gekennzeichnet, dass** der Ring (22, 28) aus einem Werkstoff mit als Kapillaren wirkenden Poren besteht.

2. Wellenlagerung nach Anspruch 1, **dadurch gekennzeichnet, dass** die Kapillaren des Rings (22, 28) zumindest im Mittel größer als die des Lagers (16, 24) sind.

3. Wellenlagerung nach Anspruch 1 oder 2, **dadurch gekennzeichnet, dass** der Ring (22, 28) aus Sintermaterial ist, insbesondere dem gleichen oder ähnlichen Material wie das des Lagers (16, 24).

4. Wellenlagerung nach einem der Ansprüche 1 bis 3, **dadurch gekennzeichnet, dass** der Ring (22, 28) zwischen dem Lager (16, 24) und einem auf der Welle (14) angeordneten rotierenden elektrischen Kontakt (20) angeordnet ist.

5. Wellenlagerung nach einem der Ansprüche 1 bis 4, **dadurch gekennzeichnet, dass** der Ring (22, 28) zumindest im Neuzustand im wesentlichen frei von Schmierstoff ist.

6. Wellenlagerung nach einem der Ansprüche 1 bis 5, **dadurch gekennzeichnet, dass** der Ring (22) drehfest auf der Welle (14) angeordnet ist, wobei der Ring (22) durch Verformung der Welle (14), insbesondere Anrollieren oder Verprägen, fixiert ist.

7. Lager (24) für eine Welle (14), insbesondere einer elektrischen Maschine (10), insbesondere Sinterlager, das eine Ausnehmung (17) für die Welle (14) aufweist und mit Schmierstoff getränkt ist, **dadurch gekennzeichnet, dass** an einer Stirnseite (26) des Lagers (24) ein Ring (28) zur Aufnahme von aus dem Lager (24) austretendem Schmierstoff befestigt ist und der Ring (28) aus einem Werkstoff mit als Kapillaren wirkenden Poren besteht.

8. Lager (24) nach Anspruch 7, **dadurch gekennzeichnet, dass** die Kapillaren des Rings (28) im Mittel größer als die des Lagers (24) sind.

9. Lager (24) nach Anspruch 7 oder 8, **dadurch gekennzeichnet, dass** der Ring (28) aus Sintermaterial ist, insbesondere dem gleichen oder ähnlichen Material wie das des Lagers (24).

10. Lager (24) nach einem der Ansprüche 7 bis 9, **dadurch gekennzeichnet, dass** der Ring (28) zumindest im Neuzustand im wesentlichen frei von Schmierstoff ist.

11. Lager (24) nach einem der Ansprüche 7 bis 10, **dadurch gekennzeichnet, dass** der Ring (28) in einer stirnseitigen Senkung (30) der Ausnehmung (17) befestigt ist und insbesondere im wesentlichen bündig mit der Stirnfläche (32) des Lagers (24) abschließt.

12. Lager (24) nach einem der Ansprüche 7 bis 11, **dadurch gekennzeichnet, dass** zwischen dem Ring () und dem Lager (24) eine Schmierstoffbarriere (34) vorgesehen ist.

13. Lager (24) nach einem der Ansprüche 7 bis 12, **dadurch gekennzeichnet, dass** der Innendurchmesser des Lagers (24) und der Innendurchmesser des Rings (28) eine sich zur Stirnseite (26) des Lagers (24) hin stetig vergrößernde Mantelfläche der Ausnehmung (17) bilden.

14. Elektrische Maschine (10) mit mindestens einem Lager nach einem der Ansprüche 7 bis 13.
